# EUROPEAN PATENT SPECIFICATION

(11) **EP 1 167 930 B1**
(45) Date of publication and mention of the grant of the patent: **29.11.2006**
(21) Application number: 00305358.4
(22) Date of filing: 26.06.2000
(51) Int. Cl.: G01G 13/10, B01F 13/10

(54) **Automated precision liquid metering apparatus using injectors as metering devices**
Vorrichtung zum automatischen präzisen Flussigkeitsmessung mit Injektoren als Dosiervorrichtung
Dispositif pour le dosage automatique précis des fluides avec des injecteurs comme dispositf de dosage

(43) Date of publication of application: 02.01.2002
(73) Proprietor: Hu, Hugo, San-Chung City, Taipei Hsien (TW)
(72) Inventor: Hu, Hugo, San-Chung City, Taipei Hsien (TW)
(74) Representative: Viering, Jentschura & Partner

(56) References cited:
- EP-A- 0 578 265
- WO-A-98/36968
- DE-A- 3 201 221

## Description

### BACKGROUND OF THE INVENTION

The present invention relates to an automated precision liquid metering apparatus, and more particularly to an automated precision liquid metering apparatus which includes apluralityof injectors that are used as metering devices and can be controlled through a microcomputer and a control circuit to suck a fixed amount of specified liquid from a storage container and then be shifted to release the sucked liquid into a receptacle on an electronic balance at where the specified liquid is precisely measured.

From the DE-A-3201221 a station for mixing especially colours and suchlike is known that comprises a plurality of different liquid substances contained in reservoirs. The content of the reservoirs is dischargeable under pressure in a mixing container placed on a balance by conveyer lines tapering off in discharging injectors. The discharging injectors are combined in a head above the mixing container. With such a station time can be saved while composing mixtures.

The EP-A-578265 discloses a metering device for preparing dosed mixtures of chemical products. It comprises a balance and a holding platform with storage containers. Discharging lines are leading into a disc that is connected with the platform and is rotatably arranged above the balance. With such an metering device an access to all storage containers on a single side of the metering device can easily be provided.

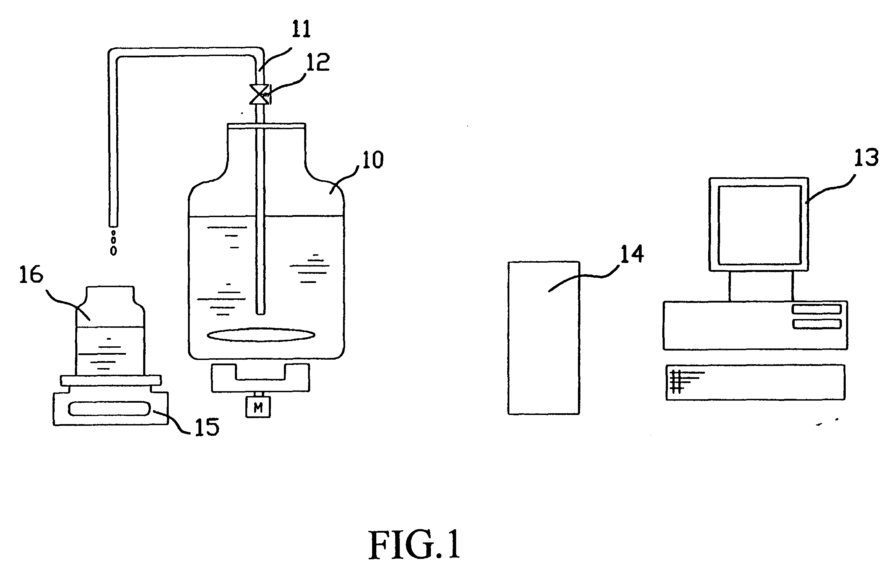

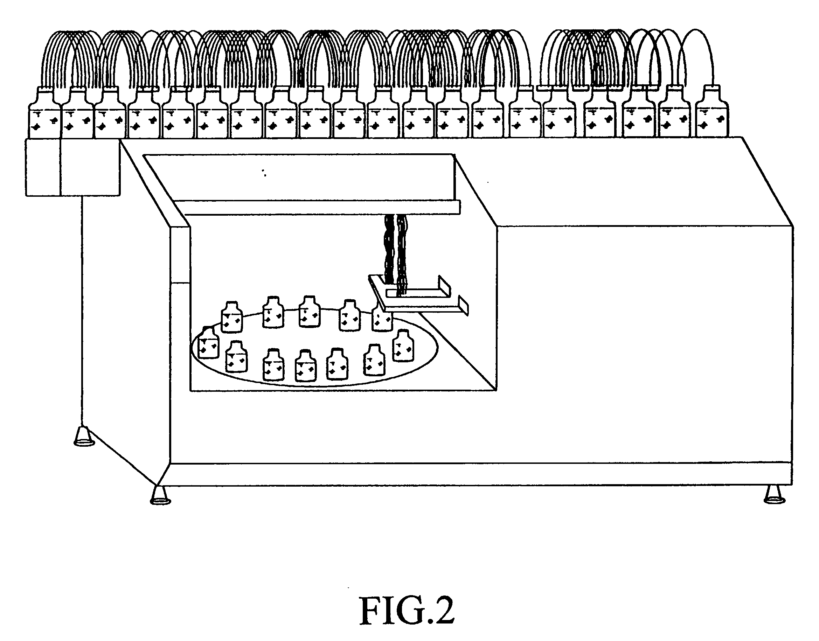

Furthermore, other commercially available automatic liquid metering apparatuses are known. Most of these liquid metering apparatuses use metering valves to precisely control the amount of a specified liquid allowed to flow from a storage container to a receptacle. Fig. 1 illustrates a most commonly adopted automatic liquid metering apparatus in which a plurality of storage containers 10 are included, a conveyance tube 11 is provided to extend between each storage container 10 and a receptacle 16 positioned on an electronic balance 15, and a metering valve 12 is connected to the conveyance tube 11 at a point close to the storage container 10. To use the above-described liquid metering apparatus to supply a precisely metered amount of a specified chemical liquid, a signal for opening the metering valve 12 that controls the flow of the specified liquid is sent by a control circuit 14 via a microcomputer 13 to the metering valve 12. Under the siphonic action, the specified liquid flows from the storage container 10 via the conveyance tube 11 into the receptacle 16 on the electronic balance 15. A signal representing a measured weight of the specified liquid in the receptacle 16 is then sent by the electronic balance 15 to the microcomputer 13 and the control circuit 14. When the specified liquid reaches a predetermined amount, the microcomputer 13 and the control circuit 14 sends a signal to close the metering valve 12 and thereby stop the supply of the specified liquid from the storage container 10. In a practical application of the above-described automatic precision liquid metering apparatus, as shown in Fig. 2, there are usually several decades or even several hundreds of storage containers 10, conveyance tubes 11 and metering valves 12 included in the apparatus for the same to work economically and practically.

The following are some disadvantages of the above-described conventional precision liquid metering apparatus of Fig. 2:
1. Each of the storage containers 10 must be equipped with one metering valve 12 to meter the amount of liquid flown out from the storage container 10, and each metering valve 12 requires complicate wiring for forming its control circuit. The manufacturing cost of the whole precision liquid metering apparatus of Fig. 2 is therefore very high.
2. In the event the metering valve 12 each includes a one-stage ON/OFF opening, such opening must be small for the metering valve 12 to precisely meter the liquid flowing therethrough. In this case, the flow rate of the liquid from the storage container 10 to the receptacle 16 is inevitably low and results in an extended time required to complete the supply of the specified liquid.
3. On the contrary, in the event the metering valve 12 each includes a multi-stage opening, although the specified liquid can be quickly supplied and precisely metered, the metering valve 12 would have more complicate structure and the apparatus of Fig. 2 would therefore require higher manufacturing cost.
4. Each storage container 10 requires one conveyance tube 11 that also forms a considerable cost of the whole apparatus of Fig. 2. And, it takes time for the specified liquid to flow from the storage container 10 via the conveyance tube 11 to the receptacle16. Moreover, chemicals in the specified liquid in the conveyance tube 11 tend to deposit because there is no way to stir the liquid and therefore well mix the chemicals in the conveyance tube 11. Under this condition, even the liquid supplied to the receptacle is accurate in its total amount, it does not mean the chemicals in the liquid quantitatively meet specified amounts.

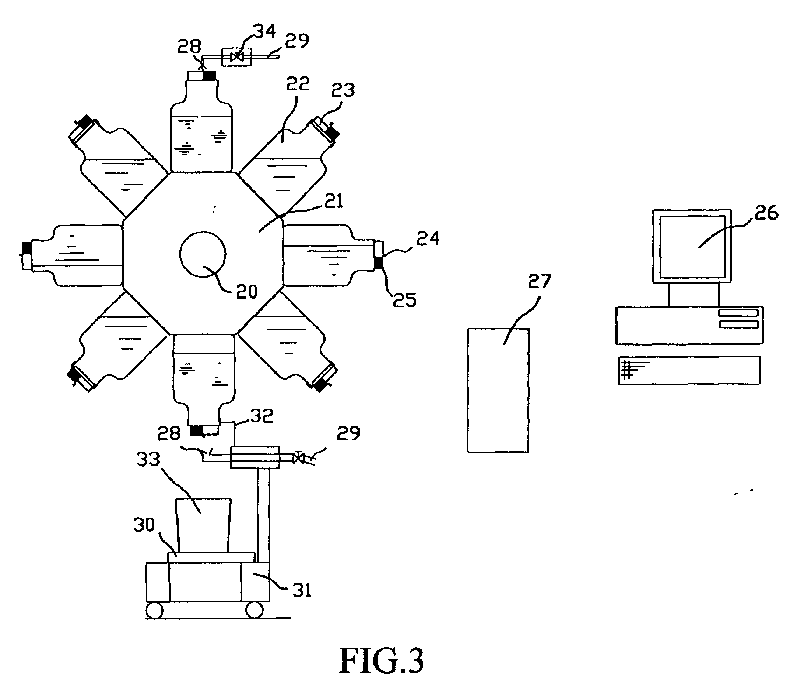

Fig. 3 illustrates another type of automatic precision liquid metering apparatus currently available in the market. In this second conventional precision liquid metering apparatus, the conveyance tubes 11 are omitted. The apparatus of Fig. 3 mainly includes a central shaft 20 that horizontally extends through a rotary table 21 to bring the latter to rotate clockwise or counterclockwise. A plurality of storage containers 22 are mounted along an outer periphery of the rotary table 21. Each storage container 22 is sealed with a cap 23. On each cap 23 there is provided a passage 24 via which liquid flows out from the storage container 22 and an amount of compressed air is supplied into the storage container 22, anda first solenoidvalve25 for controlling the open or close of the passage 24. Insulated connectors extended from positive and negative electrodes of the first solenoid valve 25 are adapted to contact with external positive and negative electrodes to make the first solenoid valve 25. The apparatus of Fig. 3 is also controlled through a microcomputer 26 and a control circuit 27 that sends instructions about the types and amounts of liquid to be supplied from the storage containers 22. When an instruction is sent, the rotary table 21 rotates to bring a storage container 22 having the specified liquid stored therein, that is referred to hereinafter as the selected storage container, to a topmost position on the rotary table 21, so that the cap 23 of the selected storage container 22 faces straight upward for the passage 24 thereof to pivotally connect to an air outlet 28 of an air supply tube 29. A second solenoid valve 34 is used to control the supply of air into the selected storage container 22 via the air supply tube 29. Thereafter, the selected storage container 22 is brought by the rotary table 21 to a lowest position on the rotary table 21, so that the cap 23 of the selected storage container 22 and the passage 24 thereof face straight downward. An electronic balance 30 carried on a traveling cart 31 is adapted to locate below the rotary table 21. The traveling cart 31 is provided with positive and negative electrodes 32 that are adapted to electrically connect to the positive and the negative electrode connectors of the first solenoid valve 25 on the cap 23 of the selected storage container 22, so that the passage 24 on the same cap 23 is opened by the first solenoid valve 25 thereof to allow liquid in the selected storage container 22 to flow into the receptacle 33 on the electronic balance 30. The electronic balance 30 is able to feed back a signal representing the measured weight of the liquid in the receptacle 33 to the control circuit 27 and the microcomputer 26. When the liquid in the receptacle 33 reaches a predetermined amount, the first solenoid valve 25 is shut off and the supply of liquid from the selected storage container 22 into the receptacle 33 is stopped.

As in the first conventional precision liquid metering apparatus of Fig. 2, the apparatus of Fig. 3 must include several decades or even several hundreds of storage containers 22 and each of which requires a solenoid valve 25.

The following are some disadvantages of the second conventional precision liquid metering apparatus of Fig. 3 without the conveyance tubes 11:
1. The first solenoid valves 25 have limited usable life that is further shortened by frequent open and close of the first solenoid valves 25.
2. Each storage container 22 has only one passage 24 and it is necessary to supply compressed air into the storage container 22 for an internal pressure thereof to be larger than an external atmospheric pressure to let the liquid out of the storage container 22.
3. When the selected storage container 22 containing compressed air is moved to the lowest position on the rotary table 21, the internal air pressure of the selected storage container 22 tends to cause the liquid to flow out the storage container 22 into the receptacle 33 at unstable speed or even jet into the receptacle 33 and therefore adversely affects the accurate measurement of the liquid.
4. The internal pressure of the selected storage container 22 decreases while the liquid flows out of the storage container 22. When the internal pressure of the selected storage container 22 becomes smaller than the external atmospheric pressure, it would be necessary to charge compressed air into the selected storage container 22 again to empty the remaining liquid in the selected storage container 22.

### SUMMARY OF THE INVENTION

It is therefore a primary object of the present invention to provide an automated precision liquid metering apparatus using injectors as metering devices to eliminate drawbacks existing in the conventional apparatus for precisely supplying and metering a specific liquid, particularly the apparatus using solenoid valves to control such precise supply of the specified liquid. To achieve this object, there is provided by the present invention an automated precision liquid metering apparatus including a plurality of storage containers uniformly spaced on a plane in multiple rows. Each storage container is sealed with a cap and has a loadstone disposed therein. A stirring means is located below the storage containers to cause the loadstones rotate and thereby evenly stir liquid in the storage containers to avoid deposition of chemicals in the storage containers. The cap of each storage container has at least one injector extended therethrough. A liquid sucking-releasing means mounted on a traveling means could be shifted to locate above a selected storage container under the control of a control means. When the liquid sucking-releasing means is in a descended position, it grabs the injector on the selected storage container, and when the same means grabbing the injector is shifted to an ascended position, it causes the injector to suck in an amount of liquid from the selected storage container while extracting the same injector from the selected storage container. The extracted injector is then moved along with the liquid sucking-releasing means by the traveling means to release all the previously sucked liquid into a receptacle positioned on an electronic balance at where the released liquid is precisely measured.

In the automated precision liquid metering apparatus of the present invention, either the metering or the solenoid valves are omitted to largely reduce the manufacturing cost of the apparatus without scarifying the accurate supplying and metering of the specified liquid.

Another object of the present invention is to provide an automated precision liquid metering apparatus that do not use conveyance tubes for transferring liquid from the storage containers to the receptacle. The problem of deposition of chemicals in the conveyance tubes can therefore be avoided. The omission of the conveyance tubes also reduces the manufacturing cost of the whole apparatus.

A further object of the present invention is to provide an automated precision liquid metering apparatus that allows quick and precise transfer of a specified liquid from a selected storage container into the receptacle within a largely shortened time period.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a schematic view of a conventional automatic precision liquid metering apparatus;
Fig. 2 is a schematic perspective view showing an application of the conventional automatic precision liquid metering apparatus of Fig. 1;
Fig. 3 is a schematic view of another conventional automatic precision liquid metering apparatus in which conveyance tubes are omitted;
Fig. 4 is a plan view showing the arrangement of an automated precision liquid metering apparatus using injectors as metering devices according to the present invention;
Fig. 5 is a plan view of the automated precision liquid metering apparatus of Fig. 4 showing the manner of descending and ascending cylinder-connected claws of the apparatus to grab and extract an injector from a selected storage container containing a specified liquid; and
Fig. 6 is a plan view showing the manner of shifting the cylinder-connected claws of the automated precision liquid metering apparatus of Fig. 4 to transfer the specified liquid in the extracted injector to a receptacle.

### DETAILED DESCRIPTION OF THE PREFERRED EMBODIMENTS

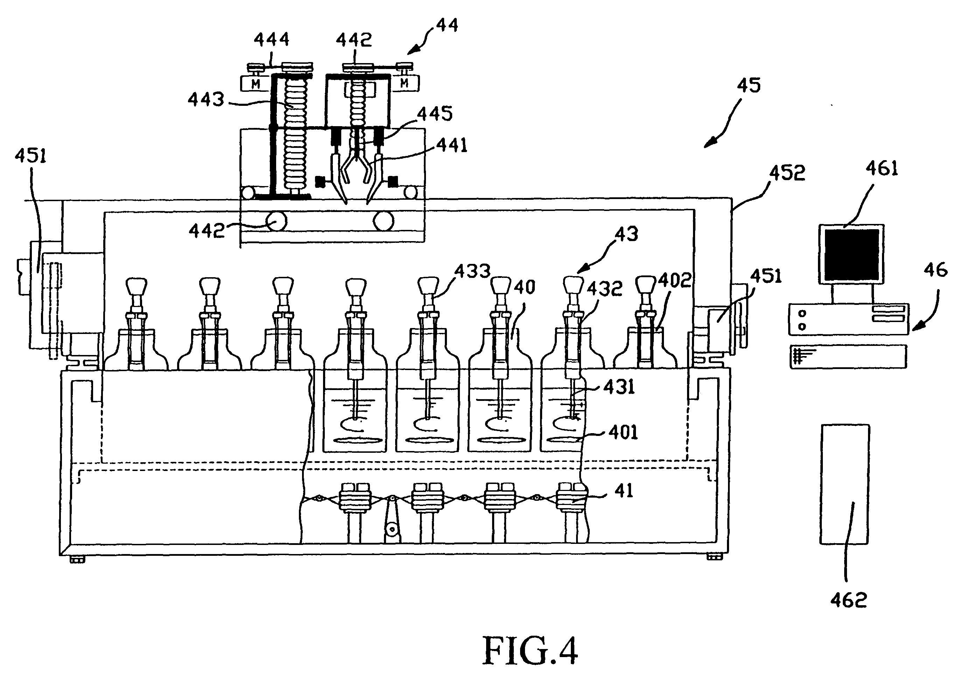

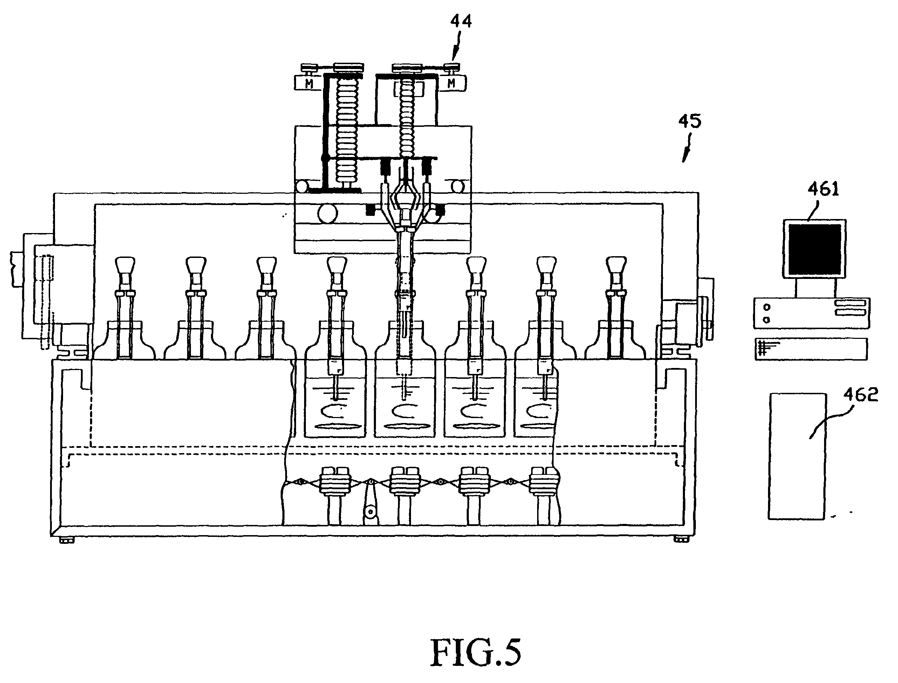

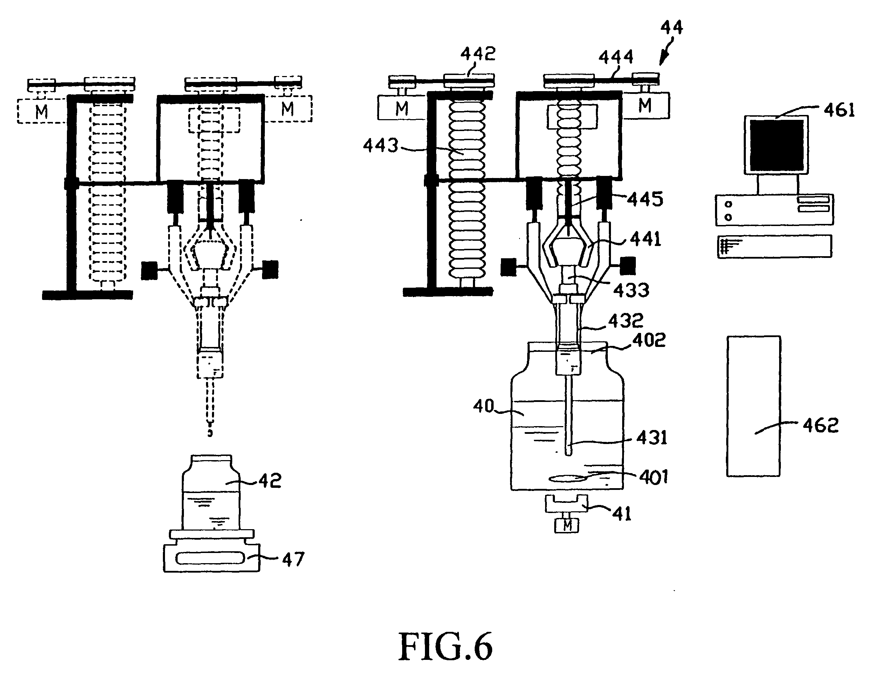

Please refer to Figs. 4 through 6, an automated precision liquid metering apparatus using injectors as metering devices according to the present invention mainly includes a plurality of storage containers 40, a stirring means 41, a receptacle 42, a plurality of injectors 43, a liquid sucking-releasing means 44, a traveling means 45, and a control means 46.

The liquid sucking-releasing means 44 includes multiple groups of cylinder-connected claws 441, multiple sets of servo or step motors 442, and a screw rod 443.

The traveling means 45 includes a plurality of sets of servo or step motors 451 and a shaft 452.

The control means 46 includes a microcomputer 461 and a control circuit 462.

The storage containers 40 are uniformly spaced on a plane in multiple rows for each containing a specific liquid therein. Each of the storage containers 40 has a loadstone 401 disposed therein. The stirring means 41 is located below the storage containers 40 and adapted to cause the loadstones 401 to rotate and therefore evenly stir and mix chemicals in the liquid in each of the storage containers 40.

Each of the storage containers 40 is sealed with a cap 402. Each cap 402 has at least an injector 43 extended therethrough. The injector 43 each includes an outer barrel 432, and an inner plunger 433 slidably fitted in the barrel 432. The barrel 432 has a narrowed front tube portion 431 deeply extended into the liquid in the storage container 40. The injector 43 is normally empty without holding any liquid therein. When a signal is sent by the microcomputer 461 of the control means 46 to supply a specified liquid from one of the storage containers 40, which will be hereinafter referred to as the selected storage container, an instruction is given by the control circuit 462 to the traveling means 45, so that the traveling means 45 moves the liquid sucking-releasing means 44 to a position immediately above the selected storage container 40 containing the specified liquid.

The liquid sucking-releasing means 44 is mounted on the shaft 452 of the traveling means 45. When the servo or step motors 451 of the traveling means 45 are started to move the shaft 452, the latter brings the liquid sucking-releasing means 44 mounted thereon to locate above the selected storage container 40. Thereafter, a first set of the servo or step motors 442 of the liquid sucking-releasing means 44 acts to ascend or descend the liquid sucking-releasing means 44. When the liquid sucking-releasing means 44 is in a descended position, it is able to grab at the injector 43 in the selected storage container 40. And, when the liquid sucking-releasing means 44 is in an ascended position, it is able to extract the injector 43 from the selected storage container 40 to separate the narrowed front tube portion 431 of the injector 43 from the cap 402 of the selected storage container 40.

More particularly, when the liquid sucking-releasing means 44 is in its descended position, a first group of the cylinder-connected claws 441 thereof are pushed forward to grab the barrel 432 of the injector 43, and a second group of the cylinder-connected claws 441 that are also fixedly connected to the screw rod 443 are caused to grab a top of the plunger 433 of the injector 43. When a second set of the servo or stop motors 442 that is connected to the screw rod 443 is started, a belt 444 of that motor 442 moves and brings the screw rod 443 to rotate. The rotating screw rod 443 in turn brings the group of cylinder-connected claws 441 fixed thereto and accordingly the plunger 433 of the injector 43 grabbed by this group of claws 441 to move upward. At this point, an amount of the specified liquid in the selected storage container 40 is sucked into the barrel 432 via the narrowed front tube portion 431. Thereafter, a first set of the servo or step motors 442 of the liquid sucking-releasing means 44 is started again to move the whole liquid sucking-releasing means 44 to the ascended position, so that the entire injector 43 is extracted from the cap 402 to separate from the selected storage container 40.

The liquid sucking-releasing means 44 in the ascended position and grabbing the injector 43 having an amount of the specified liquid sucked thereinto is then moved along with the shaft 452 of the traveling means 45 to the receptacle 42. When the narrowed front tube portion 431 of the injector 43 grabbed by the liquid sucking-releasing means 44 is in alignment with a central point of the receptacle 42, the liquid sucking-releasing means 44 is descended again to approach the narrowed front tube portion 431 to a top of the receptacle 42. The injector 43 is now ready to release the liquid previously sucked thereinto. At this point, the second set of servo or step motors 442 on the liquid sucking-releasing means 44 are started again to rotate the screw rod 443 and to push the plunger 433 of the injector 43 forward, so that the specified liquid in the barrel 432 of the injector 43 is pushed by the plunger 433 out of the barrel 432 to drop into the receptacle 42.

Since the barrel 432 of the injector 43 is a regular cylindrical member, there is a linear relationship between the amount of the specified liquid released from the barrel 432 and a distance between the plunger 433 and the narrowed front tube portion 431. That is, the amount of the liquid released from the barrel 432 could be determined by a distance by which the plunger 433 is fully pushed forward. Nevertheless, the released liquid amount can be finally determined only after it has been weighed with an electronic balance 47 on which the receptacle 42 is positioned.

It is to be noted that a tiny amount of the specified liquid would usually suspend at a lower end of the narrowed front tube portion 431 of the injector 43 at a final stage of releasing the sucked liquid from the barrel 432. This tiny amount of liquid is usually about 1/100g in weight and would still affect the accurate amount of the specified liquid sucked from the selected storage container 40.

To solve this problem, the apparatus of the present invention includes a small cylinder 445 that is fixedly connected to the screw rod 443. When the small cylinder 445 is actuated, it would lightly knock the plunger 433, so that the final tiny amount of the specified liquid suspended at the lower end of the narrowed front tube portion 431 drops into the receptacle 42. And, a correct measurement of the specified liquid the same as the predetermined amount would usually be shown on the electronic balance 47.

## Claims

1. An automated precision liquid metering apparatus using injectors (43) as metering devices, comprising:
a plurality of storage containers (40) uniformly spaced on a plane in multiple rows, each of which being sealed with a cap (402) for containing an amount of a specific liquid and a loadstone (401) therein;
a stirring means (41) being located below said storage containers (40) for causing said loadstones (401) to rotate and thereby evenly mix chemicals in said specific liquid in said storage containers (40);
a receptacle (42) being positioned on an electronic balance (47) for receiving an amount of said specific liquid sucked from one storage container (40) selected from said a plurality of storage containers (40);
a plurality of injectors (43) being separately mounted on said storage containers (40), such that each said cap (402) of said storage containers (40) has at least one said injector (43) extended therethrough; each of said injectors (43) having a narrowed front tube portion (431) extended into said specific liquid contained in each said storage container (40) to allow an amount of said specific liquid to be sucked into said injector (43) for releasing into said receptacle (42);
a traveling means (45) being mounted above said storage containers (40);
a liquid sucking-releasing means (44) being connected to said traveling means (45) and adapted to be moved by said traveling means (45) to a position above said selected storage container (40) to cause said injector (43) on said selected storage container (40) to suck an amount of said specified liquid into said injector (43), to extract said injectors (43) from said selected storage container (40), and to move said extracted injector (43) to said receptacle (42) and release said specific liquid in said injector (43) into said receptacle (42); and
a control means (46) for controlling movement of said traveling means (45).

2. An automated precision liquid metering apparatus as claimed in claim 1, wherein said liquid sucking-releasing means (44) includes multiple groups of cylinder-connected claws (441), multiple sets of servo or step motors (442), and a screw rod (443); a first group of said multiple groups of cylinder-connected claws (441) being adapted to grab one of said injectors (43) on said selected storage container (40) separately at an outer barrel (432) thereof and a second group at an inner plunger (433) thereof; and a first set of said multiple sets of servo or step motors (442) being adapted to ascend or descend said liquid sucking-releasing means (44) relative to said storage containers (40), and a second set to rotate said screw rod and thereby ascend said second group of said cylinder-connected claws (441) and accordingly pull upward said plunger (433) grabbed thereat for said injector (43) to such an amount of said specified liquid in said selected storage container (40) into said barrel (432) of said injector (43), or descend said second group of said cylinder-conpected claws (441) and accordingly push forward said plunger (433) to release said previously sucked specified liquid from said barrel (432) into said receptacle (42).

3. An automated precision liquid metering apparatus as claimed in claim 1, wherein said traveling means (45) includes multiple sets of servo or step motors (451) and a shaft (452) onto which said liquid sucking-releasing means (44) is mounted; and said multiple sets of servo or step motors (451) being adapted to move said shaft (452) to any position specified by said control means (46).

4. An automated precision liquid metering apparatus as claimed in claim 2, wherein said traveling means (45) includes multiple sets of servo or step motors (451) and a shaft (452) on to which said liquid sucking-releasing means (44) is mounted; and said multiple sets of servo or step motors (451) being adapted to move said shaft (452) to any position specified by said control means (46).

5. An automated precision liquid metering apparatus as claimed in claim 1, wherein said control means (46) includes a microcomputer (461) and a control circuit (462); and said microcomputer (461) sending a signal to said control circuit (462) that in turn giving an instruction to said traveling means (45), so that said traveling means (45) moves said liquid sucking-releasing means (44) to a specified position over said a plurality of storage containers (40).

6. An automated precision liquid metering apparatus as claimed in claim 2, wherein said screw rod (443) of said liquid sucking-releasing means has a small cylinder connected thereto for slightly knocking said plunger (433) when said plunger (433) has been fully pushed forward to release said specified liquid from said barrel (432) into said receptacle (42), so that said barrel (432) is completely emptied.

## Patentansprüche

1. Automatisierte Präzisions-Flüssigkeitsmessvorrichtung, die Injektoren (43) als Dosiervorrichtungen verwendet, aufweisend:
eine Mehrzahl von Vorratsbehältern (40), die in einer Ebene in mehreren Reihen in gleichmäßigen Abständen angeordnet sind, von denen jeder mit einer Kappe (402) abgedichtet ist, zum Enthalten einer Menge von einer spezifischen Flüssigkeit und eines Magneteisensteins (401),
ein unter den Vorratsbehältern (40) angeordnetes Rührmittel (41) zum Bewirken, dass sich die Magneteisensteine (401) drehen und **dadurch** Chemikalien in der spezifischen Flüssigkeit in den Vorratsbehältern (40) gleichmäßig mischen,
ein auf einer elektronischen Waage (47) angeordnetes Behältnis (42) zum Aufnehmen einer Menge der spezifischen Flüssigkeit, die aus einem Vorratsbehälter (40) gesaugt wird, der aus der Mehrzahl der Vorratsbehälter (40) ausgewählt ist,
eine Mehrzahl von Injektoren (43), die separat auf den Vorratsbehältern (40) angebracht sind, so dass jede der Kappen (402) der Vorratsbehälter (40) wenigstens einen Injektor (43) hat, der sich dort hindurch erstreckt, wobei jeder der Injektoren (43) einen verengten vorderen Rohrabschnitt (431) hat, der in die spezifische Flüssigkeit hineinragt, die in jedem der Vorratsbehälter (40) enthalten ist, um zu ermöglichen, dass eine Menge der spezifischen Flüssigkeit in den Injektor (43) zum Abgeben in das Behältnis (42) gesaugt wird,
ein Bewegungsmittel (45), das oberhalb der Vorratsbehälter (40) angebracht ist,
ein Flüssigkeits-Saug-Abgabe-Mittel (44), das mit dem Bewegungsmittel (45) verbunden ist und angepasst ist, um von dem Bewegungsmittel (45) zu einer Position oberhalb des ausgewählten Vorratsbehälters (40) bewegt zu werden, um zu bewirken, dass der Injektor (43) auf dem ausgewählten Vorratsbehälter (40) eine Menge der spezifischen Flüssigkeit in den Injektor (43) saugt, um die Injektoren (43) aus dem ausgewählten Vorratsbehälter (40) zu extrahieren und um den extrahierten Injektor (43) zu dem Behältnis (42) zu bewegen und die spezifische Flüssigkeit in dem Injektor (43) in das Behältnis (42) abzugeben, und
ein Steuermittel (46) zum Steuern der Bewegung des Bewegungsmittels (45).

2. Automatisierte Präzisions-Flüssigkeitsmessvorrichtung gemäß Anspruch 1, wobei das Flüssigkeits-Saug-Abgabe-Mittel (44) mehrere Gruppen von mit Zylindern verbundenen Greifern (441), mehrere Sätze von Servo- oder Schrittmotoren (442) und eine Gewindespindel (443) aufweist, wobei eine erste Gruppe der mehreren Gruppen von mit Zylindern verbundenen Greifern (441) angepasst ist, um einen der Injektoren (43) auf dem ausgewählten Vorratsbehälter (40) an einem Außen-Zylinder (432) separat davon zu ergreifen und eine zweite Gruppe an einem Innen-Kolben (433) davon, und wobei ein erster Satz der mehreren Sätze von Servo- oder Schrittmotoren (442) angepasst ist, um das Flüssigkeits-Saug-Abgabe-Mittel (44) relativ zu den Vorratsbehältern (40) anzuheben oder abzusenken, und ein zweiter Satz angepasst ist, um die Gewindespindel (443) zu drehen und **dadurch** die zweite Gruppe der mit Zylindern verbundenen Greifer (441) anzuheben und dementsprechend den ergriffenen Kolben (433) des Injektors (43) nach oben zu ziehen, um eine Menge der spezifischen Flüssigkeit in dem ausgewählten Vorratsbehälter (40) in den Zylinder (432) des Injektors (43) zu saugen, oder die zweite Gruppe der mit Zylindern verbundenen Greifer (441) abzusenken und dementsprechend den Kolben (433) nach vorn zu drücken, um die zuvor angesaugte spezifische Flüssigkeit aus dem Zylinder (432) in das Behältnis (42) abzugeben.

3. Automatisierte Präzisions-Flüssigkeitsmessvorrichtung gemäß Anspruch 1, wobei das Bewegungsmittel (45) mehrere Sätze von Servo- oder Schrittmotoren (451) und einen Schaft (452) aufweist, auf welchem das Flüssigkeits-Saug-Abgabe-Mittel (44) angebracht ist, und die mehreren Sätze von Servo- und Schrittmotoren (451) angepasst sind, um den Schaft (452) zu einer Position zu bewegen, die von dem Steuermittel (46) spezifiziert wird.

4. Automatisierte Präzisions-Flüssigkeitsmessvorrichtung gemäß Anspruch 2, wobei das Bewegungsmittel (45) mehrere Sätze von Servo- oder Schrittmotoren (451) und einen Schaft (452) aufweist, auf welchem das Flüssigkeits-Saug-Abgabe-Mittel (44) angebracht ist, und die mehreren Sätze von Servo- und Schrittmotoren (451) angepasst sind, um den Schaft (452) zu einer Position zu bewegen, die von dem Steuermittel (46) spezifiziert wird.

5. Automatisierte Präzisions-Flüssigkeitsmessvorrichtung gemäß Anspruch 1, wobei das Steuermittel (46) einen Mikrocomputer (461) und eine Steuerschaltung (462) aufweist, und der Mikrocomputer (461) ein Signal an die Steuerschaltung (462) sendet, was wiederum eine Anweisung an das Bewegungsmittel (45) gibt, damit das Bewegungsmittel (45) das Flüssigkeits-Saug-Abgabe-Mittel (44) zu einer vorgegebenen Position über der Mehrzahl von Vorratsbehältern (40) bewegt.

6. Automatisierte Präzisions-Flüssigkeitsmessvorrichtung gemäß Anspruch 2, wobei die Gewindespindel (443) des Flüssigkeits-Saug-Abgabe-Mittels einen damit verbundenen, kleinen Zylinder zum leichten Anstoßen des Kolbens (433) hat, wenn der Kolben (433) vollständig nach vorn gedrückt ist, um die spezifische Flüssigkeit aus dem Zylinder (432) in das Behältnis (42) abzugeben, damit der Zylinder (432) vollständig geleert wird.

## Revendications

1. Un dispositif de dosage automatique de précision de liquide, utilisant des injecteurs (43) comme appareils de dosage, comprenant :
une pluralité de récipients de stockage (40) espacés uniformément sur un plan en multiples rangées, chacun d'entre eux étant scellé avec un couvercle (402) pour contenir une quantité d'un liquide spécifique et un aimant naturel (401) ;
un moyen d'agitation (41) étant situé en dessous desdits récipients de stockage (40) pour provoquer la rotation desdits aimants naturels (401) et, par conséquent, pour mélanger de façon égale des produits chimiques audit liquide spécifique dans lesdits récipients de stockage (40) ;
un réceptacle (42) étant positionné sur une balance électronique (47) pour recevoir une quantité dudit liquide spécifique aspiré depuis un récipient de stockage (40) sélectionné parmi une pluralité de récipients de stockage (40) ;
une pluralité d'injecteurs (43) étant montés séparément sur lesdits récipients de stockage (40), de telle sorte que chacun desdits couvercles (402) desdits récipients de stockage (40) a au moins un dit injecteur (43) étendu au travers de celui-ci ; chacun desdits injecteurs (43) ayant une partie de tube avant resserrée (431) étendue dans ledit liquide spécifique contenu dans chacun desdits récipients de stockage (40) pour qu'une quantité dudit liquide spécifique puisse être aspirée dans ledit injecteur (43) afin d'être libérée dans ledit réceptacle (42) ;
un moyen de transport (45) étant monté au-dessus desdits récipients de stockage (40) ;
un moyen d'aspiration-libération de liquide (44) étant raccordé audit moyen de transport (45) et adapté pour être déplacé par ledit moyen de transport (45) à une position au-dessus dudit récipient de stockage sélectionné (40), afin que ledit injecteur (43) sur ledit récipient de stockage sélectionné (40) aspire une quantité dudit liquide spécifique dans ledit injecteur (43), pour extraire lesdits injecteurs (43) dudit récipient de stockage sélectionné (40), et pour déplacer ledit injecteur extrait (43) vers ledit réceptacle (42), et libérer ledit liquide spécifique dans ledit injecteur (43) dans ledit réceptacle (42) ; et
un moyen de commande (46) pour commander le déplacement dudit moyen de transport (45).

2. Un dispositif de dosage automatique de précision de liquide selon la revendication 1, dans lequel ledit moyen d'aspiration-libération de liquide (44) inclut de multiples groupes de pinces (441) reliées à un cylindre, de multiples ensembles de servomoteurs ou de moteurs pas à pas (442), et une tige filetée (443) ; un premier groupe desdits multiples groupes de pinces (441) reliées à un cylindre étant adapté pour attraper l'un desdits injecteurs (43) sur ledit récipient de stockage sélectionné (40) séparément au niveau d'un corps de pompe extérieur (432) de celui-ci, et un deuxième groupe au niveau d'un piston plongeur intérieur (433) de celui-ci; et un premier ensemble desdits ensembles de servomoteurs ou de moteurs pas à pas (442) étant adapté pour monter ou descendre ledit moyen d'aspiration-libération de liquide (44) par rapport auxdits récipients de stockage (40), et un deuxième ensemble pour faire pivoter ladite tige filetée et, donc, monter ledit deuxième groupe desdites pinces (441) reliées à un cylindre et, par conséquent remonter ledit piston plongeur (433) attrapé ici pour que ledit injecteur (43) aspire une quantité dudit liquide spécifié dans ledit récipient de stockage (40) sélectionné à l'intérieur dudit cylindre (432) dudit injecteur (43), ou descendre ledit deuxième groupe desdites pinces (441) reliées à un cylindre et, par conséquent, avancer ledit piston plongeur (433) afin de libérer, dans ledit réceptacle (42), ledit liquide spécifié aspiré précédemment dudit corps de pompe (432).

3. Un dispositif de dosage automatique de précision de liquide selon la revendication 1, dans lequel ledit moyen de transport (45) inclut de multiples ensemble de servomoteurs ou de moteurs pas à pas (451) et un arbre (452) sur lequel est monté ledit moyen d'aspiration-libération de liquide (44); et lesdits multiples ensembles de servomoteurs ou de moteurs pas à pas (451) étant adaptés pour déplacer ledit arbre (452) à n'importe quelle position spécifiée par ledit moyen de commande (46).

4. Un dispositif de dosage automatique de précision de liquide selon la revendication 2, dans lequel ledit moyen de transport (45) inclut de multiples ensembles de servomoteurs ou de moteurs pas à pas (451) et un arbre (452) sur lequel est monté ledit moyen d'aspiration-libération de liquide (44), et lesdits multiples ensemble de servomoteurs ou de moteurs pas à pas (451) étant adaptés pour déplacer ledit arbre (452) à n'importe quelle position spécifiée par ledit moyen de commande (46).

5. Un dispositif de dosage automatique de précision de liquide selon la revendication 1, dans lequel ledit moyen de commande (46) inclut un micro-ordinateur (461) et un circuit de commande (462) ; ledit micro-ordinateur (461) envoyant un signal au circuit de commande (462) qui, à son tour, donne une instruction audit moyen de transport (45), afin que ledit moyen de transport (45) déplace ledit moyen d'aspiration-libération de liquide (44) vers une position spécifiée au-dessus d'une pluralité de récipients de stockage (40).

6. Un dispositif de dosage automatique de précision de liquide selon la revendication 2, dans lequel ladite tige filetée (443) dudit moyen d'aspiration-libération de liquide a un petit cylindre raccordé à celui-ci pour taper légèrement ledit piston plongeur (433) lorsque ledit piston plongeur (433) a complètement avancé pour libérer le liquide spécifié dudit corps de pompe (432) dans ledit réceptacle (42), afin que ledit corps de pompe (432) soit complètement vidé.
